**Europäisches Patentamt**

**European Patent Office**

**Office européen des brevets**

(11) Veröffentlichungsnummer: **0 009 463**
A1

# EUROPÄISCHE PATENTANMELDUNG

(21) Anmeldenummer: 79810086.3

(22) Anmeldetag: 03.09.79

(51) Int. Cl.³: **A 47 B 81/06,** F 16 M 13/00

(30) Priorität: 07.09.78 CH 9411/78

(43) Veröffentlichungstag der Anmeldung: 02.04.80
**Patentblatt 80/7**

(84) Benannte Vertragsstaaten: **AT DE FR GB**

(71) Anmelder: **Lehmann, Walter, Unterdorf 63, CH-2514 Ligerz (CH)**

(72) Erfinder: **Lehmann, Walter, Unterdorf 63, CH-2514 Ligerz (CH)**

(54) **Knickarm mit Drehtisch.**

(57) Die Erfindung besteht aus einem Knickarm mit Drehtisch und Konsole zur Wandbefestigung. Er besteht aus der Konsole 1 mit Halterung für Dreharm und Gelenk. Ein zweiteiliger Arm 2+3 mit Lager 5+6, welcher in der Mitte geknickt und gleichzeitig in der Konsole um 180 ° gedreht werden kann. Vorn am Arm ist ein Drehtisch 4 angebracht der sich rundherum drehen lässt. An Stelle des Tisches kann auch eine Kipphalterung angebracht werden. Der Tisch oder die Halterung dient zur Aufnahme eines Fernsehgerätes welches mit dem Knickarm in jede gewünschte Stellung gebracht werden kann.

EP 0 009 463 A1

KNICKARM MIT DREHTISCH

Die Erfindung besteht aus einem Knickarm mit Drehtisch und
Konsole für die Wandbefestigung. An der Aufschraubplatte 1
ist ein Drehgelenkarm mit zwei Lagerhalter angebracht. Der
Arm selber besteht aus zwei Längen 2 + 3 und lässt sich in
der Konsole 5 drehen und in der Mitte knicken. Vorn am Arm
ist ein Drehtisch angebracht welcher sich rundherum drehen
lässt. An Stelle einer Tischplatte kann auch eine Halterung
mit Kippvorrichtung angebracht werden. Der Tisch oder die
Halterung ist zur Aufnahme eines Fernsehgerätes gedacht
welches sich bei Nichtgebrauch an die Wand stellen lässt
und bei Gebrauch mittels des Knickarmes mit Drehtisch mühelos in jede gewünschte Stellung gebracht werden kann. So
nimmt das Ganze bei Nichtgebrauch ein Minimum an Platz ein.

In den Zeichnungen sind die verschiedenen Stellungen des
Knickarmes mit Drehtisch wie folgt dargestellt:

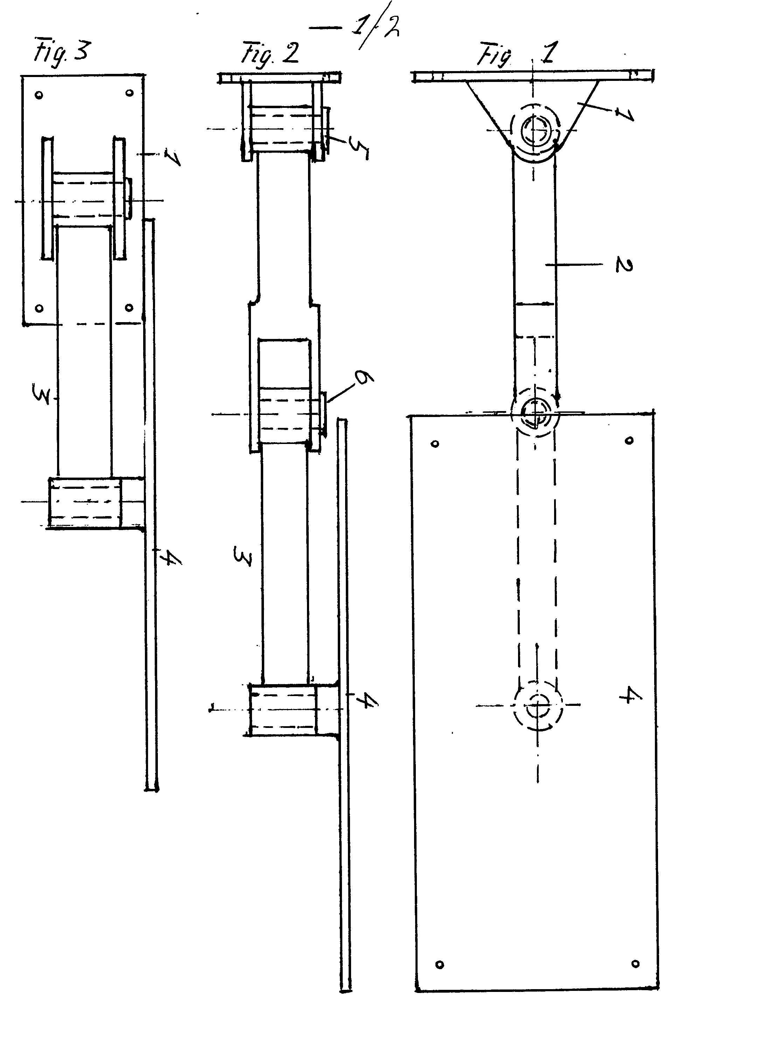

Fig. 1 zeigt den Knickarm gestreckt von oben
Fig. 2 zeigt den Knickarm gestreckt von der Seite
Fig. 3 zeigt den Knickarm halb gestreckt von oben

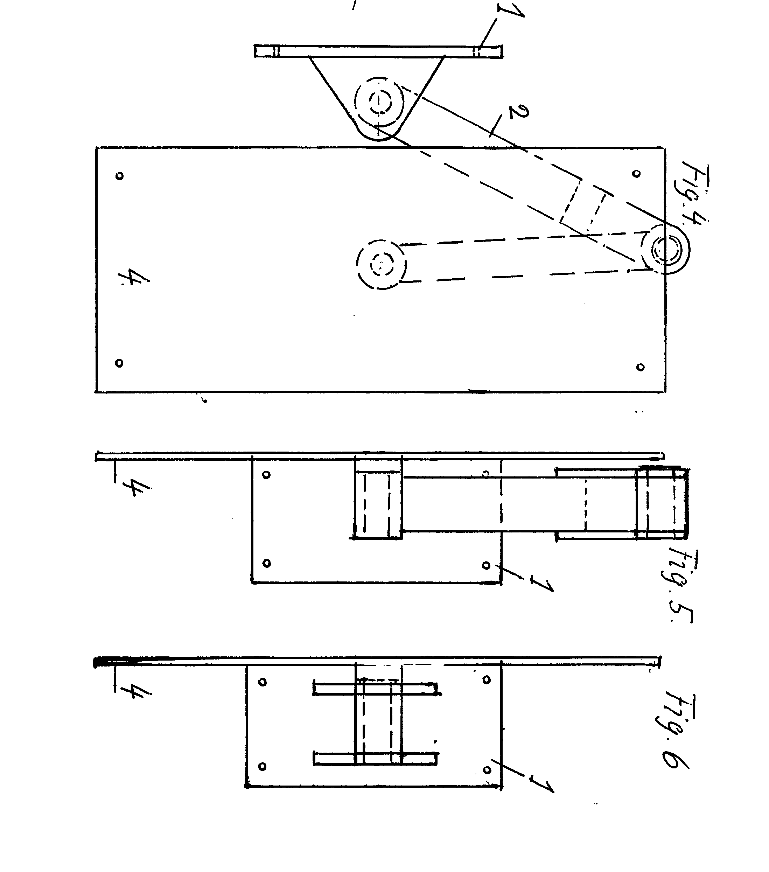

Fig. 4 zeigt den Knickarm geknickt von oben
Fig. 5 zeigt den Knickarm von vorn geknickt
Fig. 6 zeigt den Knickarm von vorn gestreckt

- 1 -

PATENTANSPRUECHE

1. Knickarm mit Drehtisch und Konsole zur Wandbefesti -
gung. Er besteht aus der Konsole 1 mit Halterung für
Dreharm und Gelenk. 1 zweiteiliger Arm 2 + 3 mit Lager 5 + 6, welcher in der Mitte geknickt werden kann
und in der Konsole um 180° gedreht. Vorn am Arm ist
ein Drehtisch 4 angebracht welcher sich rundherum
drehen lässt. Der Tisch dient zur Aufnahme eines Fernsehgerätes und kann mit dem Knickarm und Drehtisch in
jede beliebige Stellung gedreht werden.

2. Knickarm mit Drehtisch dadurch gekennzeichnet,dass das
Ganze oder Teile davon in Stahlrohr,Stahl,Kunststoff,
Aluminium oder Holz besteht.

3. Knickarm mit Drehtisch dadurch gekennzeichnet,dass das
Ganze am Boden, an der Decke oder an Möbelstücken montiert wird.

4. Knickarm mit Drehtisch dadurch gekennzeichnet,dass an
Stelle des Tisches eine Kippvorrichtung montiert wird.

5. Knickarm mit Drehtisch dadurch gekennzeichnet,dass an
Stelle eines Fernsehgerätes andere Geräte darauf ge -
stellt werden.

0009463

Fig. 3   Fig. 2   1/2   Fig. 1

Fig. 4

Fig. 5.

Fig. 6

Europäisches Patentamt

**EUROPÄISCHER RECHERCHENBERICHT**

0009463

Nummer der Anmeldung

EP 79 81 0086

| Kategorie | Kennzeichnung des Dokuments mit Angabe, soweit erforderlich, der maßgeblichen Teile | betrifft Anspruch |
|---|---|---|
| X | <u>FR - A - 2 330 949</u> (CASTA)<br>  * Seiten 1,2; Figuren 1,2 *<br><br>   -- | 1-3 |
| X | <u>NL - A - 78 02760</u> (MOON)<br>  * Anspruch 1; Figuren 1-4 *<br>& DE - A - 2 814 931<br><br>   -- | 1-5 |
| X | <u>US - A - 3 942 751</u> (FAY)<br>  * Spalte 6, Zeilen 48-69; Figur 6 *<br><br>   ---- | 1-4 |

**EINSCHLÄGIGE DOKUMENTE**

**KLASSIFIKATION DER ANMELDUNG (Int.Cl. 3)**

A 47 B 81/06
F 16 M 13/00

**RECHERCHIERTE SACHGEBIETE (Int. Cl. 3)**

A 47 B
F 16 M

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-12-1979 | SCHMITTER |

EPA form 1503.1   06.78